# EUROPÄISCHE PATENTANMELDUNG

(11) **EP 4 793 845 A1**
(43) Veröffentlichungstag der Anmeldung: **19.08.2026**
(21) Anmeldenummer: 25157960.3
(22) Anmeldetag: 14.02.2025
(51) Int. Cl.: G06Q 10/02, G06Q 20/02, G06Q 20/04, G06Q 20/06, G06Q 20/32, G06Q 20/38

(54) **COMPUTERIMPLEMENTIERTES VERFAHREN ZUR ANONYMEN ÜBERTRAGUNG EINES DIGITALEN AUTORISIERUNGSOBJEKTS**

(71) Anmelder: Research Industrial Systems Engineering (RISE) Forschungs-, Entwicklungs- und Grossprojektberatung GmbH, 2320 Schwechat (AT)
(72) Erfinder: SCHÖNBAUER, Franz, 2320 Schwechat (AT); GRECHENIG, Thomas, 2320 Schwechat (AT); GRUBER, Markus, 2320 Schwechat (AT)
(74) Vertreter: Schwarz & Partner Patentanwälte GmbH

(57) **Zusammenfassung**

Die Erfindung betrifft ein Computerimplementiertes Verfahren zur anonymen Übertragung eines digitalen Autorisierungsobjekts (Aut1) von einem ersten Benutzer (5) an einen zweiten Benutzer (6),
wobei der Server (2) eine Liste (7) führt, in welcher eine erste eindeutige Kennung (ID1) für das Autorisierungsobjekt (Aut1) angeführt ist,
wobei nur der erste Client (3) und der Server (2) die erste eindeutige Kennung (ID1) des Autorisierungsobjekts (Aut1) kennen,
wobei das Verfahren zur Übertragung des Autorisierungsobjekts (Aut1) vom ersten Benutzer (5) an den zweiten Benutzer (6) die folgenden Schritte umfasst, die im Server (2) durchgeführt werden:
- Empfangen der ersten eindeutigen Kennung (ID1),
- Erzeugen und Hinzufügen einer zweiten eindeutigen Kennung (ID2) und Löschen der ersten eindeutigen Kennung (ID1) aus der Liste (7),
- Senden der zweiten eindeutigen Kennung (ID2) an den zweiten Client (4), wobei nur der zweite Client (4) und der Server (2) die zweite eindeutige Kennung (ID2) kennen.

## Beschreibung

Die Erfindung betrifft ein computerimplementiertes Verfahren zur anonymen Übertragung eines digitalen Autorisierungsobjekts. Die Erfindung liegt auf dem Gebiet der elektronischen Ticketing-Systeme und elektronischen Bezahlsysteme. Die Erfindung betrifft insbesondere die Aufgabe, eine Transaktionssicherheit zu erhöhen.

Im Zuge der Digitalisierung werden elektronische Transaktionsmethoden zunehmend beliebter. Dazu zählen digitale Ticketing-Systeme und elektronische Geldbörsen (Wallets), die eine schnelle und bequeme Abwicklung von Transaktionen ermöglichen. Ein prominentes Beispiel für eine solche Technologie ist die Blockchain, die als Grundlage für Kryptowährungen wie Bitcoin fungiert. Dabei werden Transaktionen in einer dezentralen und öffentlich zugänglichen Datenbank gespeichert, wodurch eine lückenlose Historie aller Geldbewegungen entsteht.

Die Blockchain-Technologie bringt jedoch erhebliche Herausforderungen hinsichtlich der Anonymität und des Datenschutzes mit sich. Bei Bitcoin etwa sind zwar keine direkten Personendaten in den Transaktionen enthalten, jedoch werden alle Transaktionen einer Wallet-Adresse zugeordnet und öffentlich einsehbar gespeichert. Sobald eine Wallet-Adresse einer Person zugeordnet werden kann, wird es möglich, sämtliche mit dieser Wallet durchgeführten Transaktionen nachzuvollziehen. Dies führt zu einem Mangel an Anonymität, da einmal hergestellte Verknüpfungen langfristig bestehen und die Privatsphäre der Nutzer beeinträchtigen.

Andere technische Umsetzungen von Transaktionssystemen wie PayPal oder Apple Pay etwa bieten zwar eine höhere Benutzerfreundlichkeit und breitere Akzeptanz, doch auch hier bestehen Datenschutzbedenken, da zentrale Instanzen wie der Zahlungsdienstleister oder Drittanbieter Zugriff auf Transaktionsdaten haben.

Digitale Ticketing-Systeme, die für den öffentlichen Nahverkehr, Veranstaltungen und Zugangskontrollen verwendet werden, stellen eine weitere Form elektronischer Transaktionsanwendungen dar. Sie speichern typischerweise Informationen zu Nutzern und Transaktionen, die von Betreibern analysiert werden können. Diese Systeme bieten zwar Komfort, doch auch hier kann bei einer Verknüpfung zu einer Person die Transaktionshistorie verfolgt werden. Der Wunsch nach einer datenschutzfreundlichen Gestaltung solcher Systeme nimmt daher zu, um die Privatsphäre der Nutzer bestmöglich zu schützen.

In den genannten zentralisierten Systemen liegt die Verwaltung und Kontrolle der Transaktionsdaten somit bei einem einzigen Anbieter, der Zugriff auf sämtliche Nutzertransaktionen hat und somit auch potenziell auf sensible Daten, was bei Angriffen auf die Plattform zu Datenverlusten oder Missbrauch führen kann. Die Aufgabe, die sich aus diesem Stand der Technik ergibt, besteht daher darin, ein elektronisches Zahlungssystem bereitzustellen, das die Sicherheit und Anonymität der Transaktionen gegenüber bestehenden Ansätzen verbessert, um sowohl Manipulationen durch Dritte zu verhindern als auch den Schutz der Privatsphäre der Nutzer zu gewährleisten. Somit betrifft die Erfindung insbesondere die Aufgabe, eine Transaktionssicherheit zu erhöhen, was gemäß der Entscheidung T2426/19 der Beschwerdekammern des Europäischen Patentamts als technische Aufgabenstellung einzustufen ist.

Diese Aufgabe wird gelöst durch ein computerimplementiertes Verfahren zur anonymen Übertragung eines digitalen Autorisierungsobjekts, wobei das Verfahren in einem System umfassend einen Server, einen ersten Client eines ersten Benutzers und einen zweiten Client eines zweiten Benutzers durchgeführt wird, wobei der Server eine Liste führt, in welcher eine erste eindeutige Kennung für das Autorisierungsobjekt angeführt ist, wobei nur der erste Client und der Server die erste eindeutige Kennung des Autorisierungsobjekts kennen, wobei das Verfahren zur Übertragung des Autorisierungsobjekts vom ersten Benutzer an den zweiten Benutzer die folgenden Schritte umfasst, die im Server durchgeführt werden:
- Empfangen der ersten eindeutigen Kennung,
- Erzeugen und Hinzufügen einer zweiten eindeutigen Kennung in die Liste und Löschen der ersten eindeutigen Kennung aus der Liste,
- Senden der zweiten eindeutigen Kennung vom Server an den zweiten Client, wobei nur der zweite Client und der Server die zweite eindeutige Kennung kennen.

Dieses Verfahren hat insbesondere den Vorteil, dass ein besonders hoher Grad an Anonymität vorliegt, da der Server keine Transaktionsdaten empfängt oder verarbeitet. Der Server führt nur eine Liste mit allen im Umlauf befindlichen Autorisierungsobjekten, z.B. digitalen Tickets oder digitalen Münzen, und implementiert zumindest eine Funktion, um ein Autorisierungsobjekt zwischen Benutzern zu transferieren.

Die Erfindung beruht auf der besonderen Erkenntnis, dass als Inhaber eines Autorisierungsobjekts jene Person angesehen wird, die in Kenntnis der eindeutigen Kennung ist. Damit definiert die eindeutige Kennung bereits das Autorisierungsobjekt, d.h. es muss im Server oder in den Clients auch keine Verknüpfung hinterlegt sein, was diese eindeutige Kennung ist. Zwar könnte als Nachteil dieses Systems angesehen werden, dass ein Dritter schlichtweg eine eindeutige Kennung erraten könnte und dadurch durch Erraten einer Kennung zum Besitzer des Autorisierungsobjekts gemacht wird, jedoch kann dies dadurch überwunden werden, dass die Länge und damit die Anzahl der möglichen Kennungen hinreichend groß ist. Beispielsweise könnte die eindeutige Kennung ein 128-Bit-AES-Schlüssel oder 256-Bit-AES-Schlüssel sein.

Die Erfindung kann an folgendem Beispiel verdeutlicht werden. In der Liste des Servers sind zwanzig 256-Bit-AES-Schlüssel hinterlegt. Wenn eine Person in Kenntnis eines der zwanzig 256-Bit-AES-Schlüssel ist, wird diese Kenntnis als Eintrittskarte für z.B. eine Kinovorstellung angesehen. Beispielsweise kann der Server einen der zwanzig 256-Bit-AES-Schlüssel an den Client eines ersten Benutzers schicken. Es wäre für einen Dritten praktisch nicht möglich, diesen 256-Bit-AES-Schlüssel und damit die Eintrittskarte zu erraten. Wenn der erste Benutzer dieses Kinoticket an einen zweiten Benutzer weitergeben will, sendet er diesen 256-Bit-AES-Schlüssel an den zweiten Benutzer. Ohne weitere Maßnahmen würde dies jedoch zu einer Verdopplung führen, da man nicht davon ausgehen kann, dass der erste Benutzer den 256-Bit-AES-Schlüssel löscht. Um dieses Problem zu überwinden, wird erfindungsgemäß eine Funktion implementiert, dass der zweite Benutzer den empfangenen 256-Bit-AES-Schlüssel an den Server sendet, der daraufhin prüft, ob sich der 256-Bit-AES-Schlüssel in der genannten Liste befindet, woraufhin dieser aus der Liste gelöscht wird. Gleichzeitig fügt der Server einen neuen 256-Bit-AES-Schlüssel zu der Liste hinzu und sendet diesen an den zweiten Benutzer. Zu diesem Zeitpunkt kann der zweite Benutzer die Transaktion als beendet ansehen, da zu diesem Zeitpunkt nur er in Kenntnis des neuen 256-Bit-AES-Schlüssels ist. Der vormalige 256-Bit-AES-Schlüssel, der zwischen den beiden Benutzern getauscht wurde, ist nun wertlos, da er sich nicht mehr in der Liste des Servers befindet.

Aus dem vorgenannten Beispiel ist die technische Wirkung des erfindungsgemäßen Verfahrens besonders gut ersichtlich, da die eindeutigen Kennungen der "permanenten" Autorisierungsobjekte während jeder Transaktion zerstört und neu erzeugt werden. Es ist jedoch ersichtlich, dass sich die Gesamtanzahl der eindeutigen Kennungen und damit auch die Gesamtanzahl der Autorisierungsobjekte in der Liste durch die Transkationen nicht verändert.

Der hohe Grad der Anonymisierung in diesem System ist auch dadurch ersichtlich, dass es für den zweiten Benutzer egal ist, über welchen Transaktionskanal er mit dem Server kommuniziert und der Server auch keine Identifikation des zweiten Benutzers benötigt. Beispielsweise kann der zweite Benutzer bei einer ersten Transaktion über SMS mit dem Server kommunizieren, in einer zweiten Kommunikation per E-Mail und in einer dritten Kommunikation über eine unmittelbare TCP/IP-Kommunikation zwischen dem zweiten Client und dem Server. Egal über welchen Kommunikationskanal der zweite Benutzer die eindeutige Kennung erhält, kann er sie (gegebenenfalls auch manuell) demselben Client hinzufügen, ohne dass der Server die Transaktionen demselben Benutzer zuordnen könnte.

Es kann somit zusammengefasst werden, dass der Server zu jedem Zeitpunkt nur die Gesamtanzahl an Autorisierungsobjekten im System kennt. Jedoch hat der Server keine Kenntnis darüber, welcher Benutzer wie viele Autorisierungsobjekte besitzt oder welche Transaktionen zwischen welchen Benutzern durchgeführt wurden. Das erfindungsgemäße Verfahren erfüllt somit höchste Standards bezüglich Anonymität als auch Sicherheit, insbesondere da der Server nicht einmal in Kenntnis von Adressen der Wallets sein muss, geschweige denn personenbezogenen Benutzerdaten, Kontodaten, Kreditkartendaten etc.

Wie aus dem oben vorgebrachten Beispiel ersichtlich ist, kann bevorzugt sein, dass das Verfahren die folgenden Schritte umfasst:
- Senden der ersten eindeutigen Kennung vom ersten Client an den zweiten Client, und
- Senden der ersten eindeutigen Kennung vom zweiten Client an den Server.

In anderen Worten sendet der Sender (d.h. der erste Benutzer) der ersten eindeutigen Kennung keine Nachricht an den Server, sondern der Empfänger (d.h. der zweite Benutzer) ist dafür verantwortlich, dass er die Transaktion verifiziert, indem er die erste eindeutige Kennung an den Server sendet, wo diese aus der Liste gelöscht wird, wonach der erste Benutzer keine Kenntnis mehr über das Autorisierungsobjekt mehr hat. Erst wenn der zweite Benutzer die zweite eindeutige Kennung erhält, wird dieser die Transaktion als bestätigt und beendet ansehen. Dieses Verfahren zeichnet sich durch eine besonders hohe Sicherheit aus. Es besteht der große Vorteil, dass die ganze Kommunikation mit dem Server nur über den zweiten Client des zweiten Benutzers durchgeführt wird, d.h. dieser hat die volle Kontrolle über die Kommunikation. Zwar würde man annehmen, dass das Verfahren eine Sicherheitslücke aufweist, da für einen kurzen Zeitraum beide Benutzer Kenntnis der ersten eindeutigen Kennung haben, jedoch stellt dies kein Problem dar, da der zweite Benutzer eine Fehlermeldung erhalten würde, wenn der erste Benutzer eine neue eindeutige Kennung dieses Autorisierungsobjekts vom Server anfordert, bevor dies durch den zweiten Benutzer erfolgt.

Alternativ kann das Verfahren jedoch auch den folgenden Schritt umfassen:
- Senden der ersten eindeutigen Kennung und einer Adresse des zweiten Clients vom ersten Client an den Server.

In dieser Variante kann die Adresse des zweiten Clients eine beliebige Adresse eines Wallets des zweiten Benutzers sein, wobei dies jedoch keineswegs zwingend ist und auch nicht immer erwünscht ist, z.B. wenn die Anonymitätserfordernisse im Vordergrund stehen. Die Adresse könnte beispielsweise auch eine Rufnummer des zweiten Benutzers sein, sodass der Server die zweite eindeutige Kennung per SMS oder dergleichen an den zweiten Benutzer senden kann. In einer nächsten Transaktion könnte die Adresse eine E-Mailadresse des zweiten Benutzers sein, sodass der Server die zweite eindeutige Kennung per E-Mail an den zweiten Benutzer senden kann. Der Benutzer könnte die beiden zweiten eindeutigen Kennungen manuell demselben Wallet hinzufügen. Es ist daher ersichtlich, dass der Server keine Kenntnis darüber hat, wie viele Autorisierungsobjekte im selben Wallet vorliegen. Somit ist auch diese Variante hinreichend, um ein Transaktionsverfahren mit ausreichend hohen Anonymitäts- und Sicherheitserfordernissen umzusetzen.

Man kann auch das umgekehrte Risiko betrachten, dass aufgrund eines Verbindungsproblems der zweite Client nicht mehr die neue zweite eindeutige Kennung erhalten könnte. Das Verfahren könnte dahingehend erweitert werden, dass im Verbindungsaufbau zwischen Server und zweiten Client zuerst eine Session aufgebaut bzw. ausgehandelt wird. Die neue eindeutige Kennung wird in einen technischen Zwischenstatus gesetzt ("nicht aktiviert") bevor der zweite Client den erfolgreichen Empfang der neuen eindeutigen Kennung bestätigt. Dann wird sie als "aktiviert" gesetzt. Bei einer Unterbrechung des Vorgangs kann der zweite Client mit dem Wissen um die ausgehandelte Session den Vorgang fortsetzen. Um dies umzusetzen, kann vor dem Schritt des Sendens der zweiten eindeutigen Kennung an den zweiten Client eine Verbindung (Session) mit einer eindeutigen Verbindungsidentifikation (Session-ID) zwischen dem Server und dem zweiten Client aufgebaut werden, und wobei der Server die zweite Kennung in einen nicht aktivierten Zwischenstatus setzt, bis der zweite Client den Empfang der zweiten eindeutigen Kennung bestätigt (wonach der Server die zweite Kennung in einen aktivierten Zwischenstatus versetzt, wobei der zweite Client die zweite eindeutige Kennung im Falle eines Verbindungsproblems unter Angabe der eindeutigen Verbindungsidentifikation nochmals abrufen kann, solange sich die zweite eindeutige Kennung im nicht aktivierten Zwischenstatus befindet.

In einer Variante kann das hierin beschriebene Verfahren auch dazu eingesetzt werden, um den Autorisierungsobjekten einen Wert zuzuweisen. Beispielsweise könnte ein erstes Autorisierungsobjekt eine Eintrittskarte für ein Theater repräsentieren und ein zweites Autorisierungsobjekt könnte eine Eintrittskarte für ein Kino repräsentieren. Um dies umzusetzen, könnten in der Liste zu jedem Schlüssel ein entsprechender Wert zugeordnet sein. Im obigen Beispiel könnte in der Liste gespeichert sein: "{erste eindeutige Kennung, Theaterkarte}; {dritte eindeutige Kennung, Kinokarte}". Wenn die zweite eindeutige Kennung erzeugt wird, wird dieser derselbe Wert wie der ersten eindeutigen Kennung zugewiesen, sodass der vorgenannte Eintrag {erste eindeutige Kennung, Theaterkarte} gelöscht wird und der Eintrag {zweite eindeutige Kennung, Theaterkarte} der Liste hinzugefügt wird. Es hat sich jedoch herausgestellt, dass dieses Verfahren manipulationsanfällig ist, z.B. indem ein entsprechender Angriff auf den Server vorgenommen wird und der Wert "Kinokarte" von einem Angreifer in den Wert "Theaterkarte" abgeändert wird.

Um das genannte Problem zu überwinden und eine technische Lösung bereitzustellen, dass den Autorisierungswerten ein Wert mit möglichst hohen Sicherheitsstandards zugewiesen wird, wird besonders bevorzugt vorgesehen, dass ein Algorithmus bereitgestellt wird, und die erste eindeutige Kennung und die zweite eindeutige Kennung derart beschaffen sind, dass der Algorithmus bei Anwendung auf die erste eindeutige Kennung und auf die zweite eindeutige Kennung denselben Wert ausgibt. In anderen Worten soll mit dem Algorithmus der Wert des Autorisierungsobjekts errechenbar sein. In einem Beispiel kann der Algorithmus beispielsweise der Modulo-Operator sein, z.B. mod 10. In diesem Beispiel wäre das Ergebnis eine Zahl von 0 bis 9, d.h. man könnte in diesem Beispiel den Schlüsseln zehn verschiedene Werte zuweisen. Durch andere Algorithmen können auch entsprechend größere oder kleinere Wertebereiche erzielt werden. Soll den Autorisierungsobjekten derart ein Wert zugeordnet werden, ist wichtig, dass der Algorithmus dasselbe Ergebnis liefert, wenn er auf die erste eindeutige Kennung und auf die zweite eindeutige Kennung angewandt wird, damit sich der Wert bei der Transaktion nicht verändert. Der Algorithmus kann beispielsweise derart beschaffen sein, dass er bei Anwendung auf unterschiedliche eindeutige Kennungen zumindest zwei oder zumindest vier und/oder maximal zehn, maximal fünfzig oder maximal hundert verschiedene Werte ausgibt.

Im vorgenannten Verfahren ist auch bevorzugt, wenn in der Liste eine dritte eindeutige Kennung angeführt ist, wobei der Algorithmus bei Anwendung auf die dritte eindeutige Kennung einen anderen Wert ausgibt, verglichen zu dem Wert, den der Algorithmus bei Anwendung auf die erste oder zweite eindeutige Kennung ausgibt. Dadurch werden Autorisierungsobjekte verschiedener Werte implementiert.

Bei den genannten Verfahren, bei denen die eindeutigen Kennungen einen Wert repräsentieren, ist für die Benutzer besonders von Vorteil, dass diese nicht beim Server nachfragen müssen, welchen Wert ein Autorisierungsobjekt hat, d.h. sie müssen keinen zusätzlichen Wert aus der Liste abrufen, wie dies oben ausgeführt wurde. Wenn die Benutzer in Kenntnis des Algorithmus sind, können diese selbst den Algorithmus auf die eindeutigen Kennungen anwenden, um deren Wert zu bestimmen. Dadurch wird die Sicherheit des Transaktionsverfahren weiter erhöht. In anderen Worten kann der Algorithmus dem ersten Benutzer und/oder dem zweiten Benutzer zur Verfügung stehen und jeweils im ersten Client und/oder im zweiten Client hinterlegt sein.

Wenn den Autorisierungsobjekten ein Wert zugewiesen ist, können im Verfahren weitere Funktionen implementiert sein. Beispielsweise könnten die Autorisierungsobjekte als digitale Münzen angesehen werden. In diesem Fall könnte das Verfahren eine "Teilungsfunktion" implementieren, z.B. um ein Autorisierungsobjekt mit dem Wert "2" in zwei Autorisierungsobjekte mit dem Wert "1" umzuwandeln. Dies kann umgesetzt werden, indem in der Liste eine vierte eindeutige Kennung angeführt ist und das Verfahren die folgenden im Server stattfindenden Schritte umfasst:
- Empfangen der vierten eindeutigen Kennung,
- Erzeugen und Hinzufügen einer fünften eindeutigen Kennung und einer sechsten eindeutigen Kennung in die Liste und Löschen der vierten eindeutigen Kennung aus der Liste, wobei der Algorithmus bei Anwendung auf die vierte eindeutige Kennung einen Wert ausgibt, der gleich groß ist wie die Summe aus Werten, die der Algorithmus bei Anwendung auf die fünfte eindeutige Kennung und auf die sechste eindeutige Kennung ausgibt.

In anderen Worten teilt der Benutzer in diesem Fall ein Autorisierungsobjekt in zwei neue Autorisierungsobjekte, welche in Summe denselben Wert aufweisen wie das erstgenannte, nun nicht mehr vorhandene Autorisierungsobjekt. Es ist ersichtlich, dass der Gesamtwert der Autorisierungsobjekte im Server konstant geblieben ist. An dieser Stelle sei festgehalten, dass der Begriff "Summe" nicht streng zu sehen ist, da z.B. der Algorithmus bei Anwendung auf die vierte eindeutige Kennung den Wert 0 ausgeben könnte, was eine digitale 2-Einheiten-Münze repräsentiert, und der Algorithmus könnte bei Anwendung auf die fünfte und sechste eindeutige Kennung jeweils den Wert 1 ausgeben, was jeweils eine digitale 1-Einheiten-Münze repräsentiert. Hier definiert sich die "Summe" als 1 + 1 = 0.

Zusätzlich zur obigen Teilfunktion könnte das Verfahren auch eine Zusammenfassen-Funktion aufweisen. Dies kann umgesetzt werden, indem in der Liste eine siebte und achte eindeutige Kennung angeführt ist und das Verfahren die folgenden im Server stattfindenden Schritte umfasst:
- Empfangen der siebten und achten eindeutigen Kennung,
- Erzeugen und Hinzufügen einer neunten eindeutigen Kennung in die Liste und Löschen der siebten und achten eindeutigen Kennung aus der Liste, wobei der Algorithmus bei Anwendung auf die neunte eindeutige Kennung einen Wert ausgibt, der gleich groß ist wie die Summe aus Werten, die der Algorithmus bei Anwendung auf die siebte eindeutige Kennung und auf die achte eindeutige Kennung ausgibt.

Weiters könnte das Verfahren auch eine Check-Funktion umfassen, damit der Benutzer auch überprüfen kann, ob ein Autorisierungsobjekt noch gültig ist. Hierfür kann ein Benutzer eine eindeutige Kennung an den Server senden und der Server kann diesem Benutzer bestätigen oder verneinen, ob sich diese eindeutige Kennung in der Liste befindet. Alternativ könnte ein Benutzer eine eindeutige Kennung an den Server senden, woraufhin der Server diese eindeutige Kennung aus der Liste streicht, eine neue eindeutige Kennung erzeugt, die neue eindeutige Kennung in die Liste hinzufügt und die neue eindeutige Kennung an diesen Benutzer retourniert. Dies kann auch eingesetzt werden, wenn dem Autorisierungsobjekt kein Wert zugewiesen wird.

Zusätzlich könnte das Verfahren eine Einlösefunktion implementieren, z.B. wenn das Autorisierungsobjekt eine Eintrittskarte ist und der Benutzer diese vor Ort einlösen will, z.B. um eine Dienstleistung zu konsumieren. In diesem Fall kann ein Benutzer eine eindeutige Kennung an den Server senden und der Server kann an einen Dritten bestätigen oder verneinen, ob sich diese eindeutige Kennung in der Liste befindet, wobei diese eindeutige Kennung ersatzlos aus der Liste gestrichen wird.

In einer besonders bevorzugten Variante kann in dem System vorgesehen sein, dass sich eine mechanische Schranke öffnet, wenn einer der Benutzer ein Autorisierungsobjekt besitzt, d.h. die entsprechende eindeutige Kennung kennt. In diesem Fall kann der zweite Client beispielsweise mit einer mechanischen Schranke verbunden sind und nach Erhalt der zweiten eindeutigen Kennung die mechanische Schranke öffnen. In anderen Worten ist in diesem Fall der erste Benutzer die Person, für die sich die mechanische Schranke öffnet, und die mechanische Schranke sammelt alle Autorisierungsobjekte, z.B. als Nachweis, wie viele Besucher einen Kinosaal betreten haben. Alternativ könnte die mechanische Schranke auch die genannte Einlösefunktion implementieren, d.h. der erste oder der zweite Benutzer sendet eine eindeutige Kennung an einen Client, der mit der mechanischen Schranke verbunden ist, und diese sendet diese eindeutige Kennung an den Server, der dem Client der mechanischen Schranke bestätigt (in welchem Fall die mechanische Schranke geöffnet wird) oder verneint, ob sich diese eindeutige Kennung in der Liste befindet, wobei diese eindeutige Kennung ersatzlos aus der Liste gestrichen wird.

In einem weiteren Aspekt schafft die Erfindung einen Server und ein System mit einem Server, einem ersten Client und einem zweiten Client, wobei dieser Server bzw. dieses System dazu ausgebildet ist, das vorgenannte Verfahren zu implementieren.

Im Folgenden werden bevorzugte und nicht einschränkende Ausführungsformen durch Verweis auf die angehängten Zeichnungen erläutert.
Figur 1 zeigt ein Verfahren zur anonymen Übertragung eines digitalen Tickets zwischen zwei Benutzern in einer ersten Variante.
Figur 2 zeigt ein Verfahren zur anonymen Übertragung eines digitalen Tickets zwischen zwei Benutzern in einer zweiten Variante.
Figur 3 zeigt ein Verfahren zur anonymen Übertragung einer digitalen Münze zwischen zwei Benutzern.
Figur 4a und Figur 4b zeigen ein Verfahren zur Teilung einer digitalen Münze.

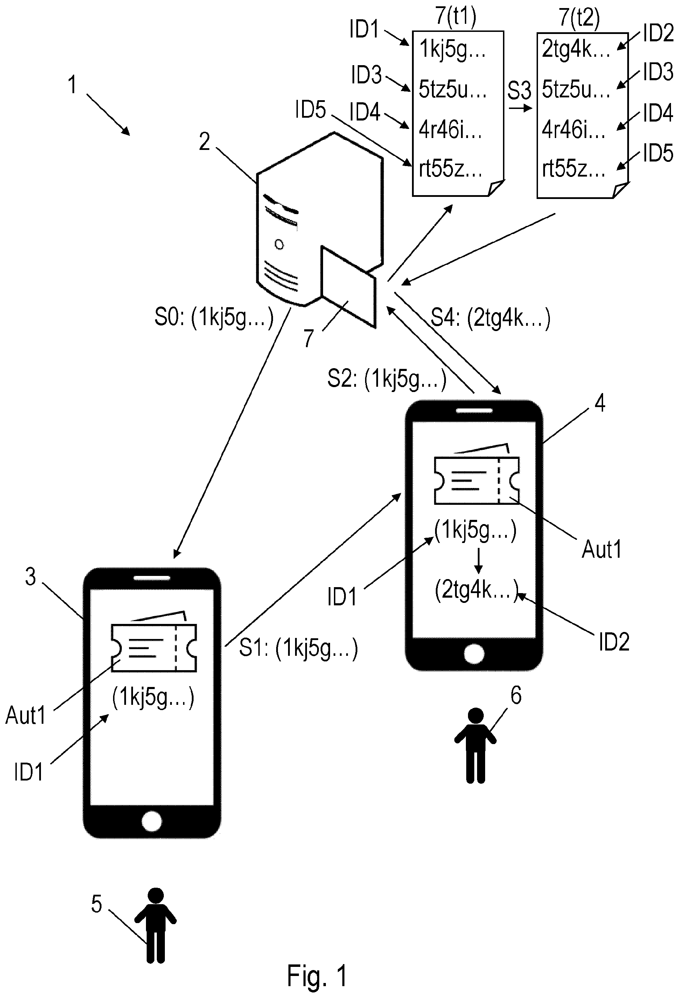

Figur 1 zeigt ein System 1 mit einem Server 2, einem ersten Client 3 und einem zweiten Client 4. Der erste Client 3 wird von einem ersten Benutzer 5 benutzt und der zweite Client 4 wird von einem zweiten Benutzer 6 benutzt. Ziel ist es, ein computerimplementiertes Verfahren bereitzustellen, um ein digitales Autorisierungsobjekt Aut1 vom ersten Benutzer 5 an den zweiten Benutzer 6 zu übertragen.

Der Server 2 ist beispielsweise ein Netzwerkgerät oder eine Softwareanwendung, die zur Verarbeitung, Speicherung und Weiterleitung von Daten dient und mit den Clients 3, 4 kommuniziert, um Anfragen zu empfangen, Transaktionen zu verarbeiten oder Informationen bereitzustellen. Der Server 2 ist beispielsweise ein zentraler oder verteilter Computer, ein Cloud-Dienst oder ein dedizierter Zahlungsserver, der Datenbanken und Sicherheitsprotokolle verwendet, um Zahlungsvorgänge, Authentifizierungsprozesse und die Verwaltung von Benutzerinformationen zu unterstützen.

Hierin ist ein Client 3, 4 beispielsweise ein elektronisches Gerät oder eine Softwareanwendung, die in der Lage ist, Transaktionen zu initiieren, Informationen zu empfangen und an einen Server oder andere Geräte zu übermitteln, um Zahlungsvorgänge, Authentifizierungsprozesse oder Datenverarbeitungsabläufe durchzuführen. Der Client ist beispielsweise ein Mobiltelefon, ein Tablet, ein Laptop oder ein tragbares Gerät wie eine Smartwatch, aber auch eine Anwendung, die auf diesen Geräten ausgeführt wird, wie eine digitale Wallet-App oder ein Browser.

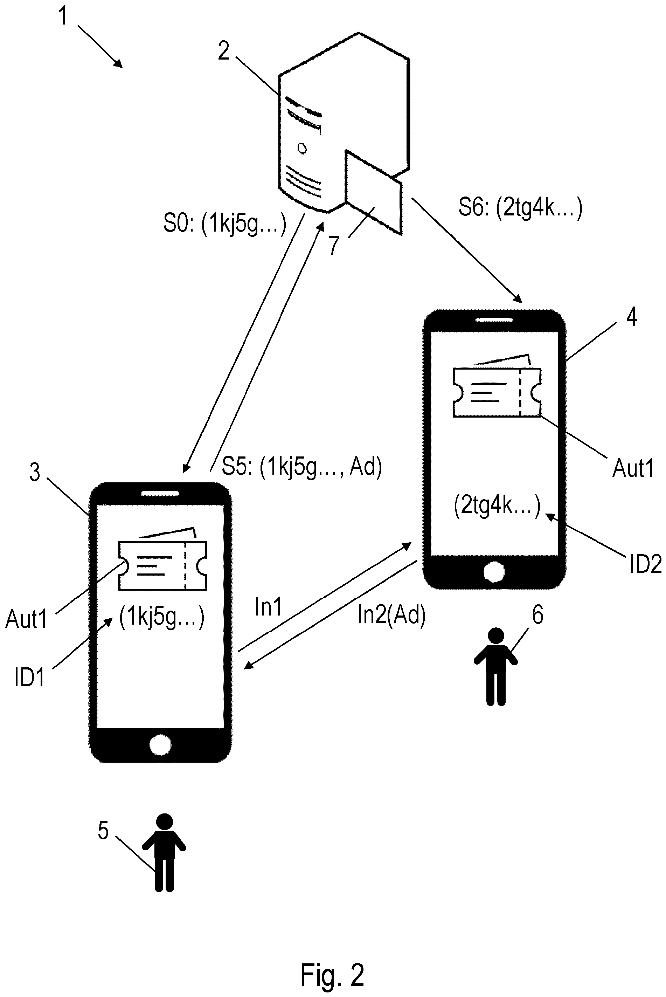

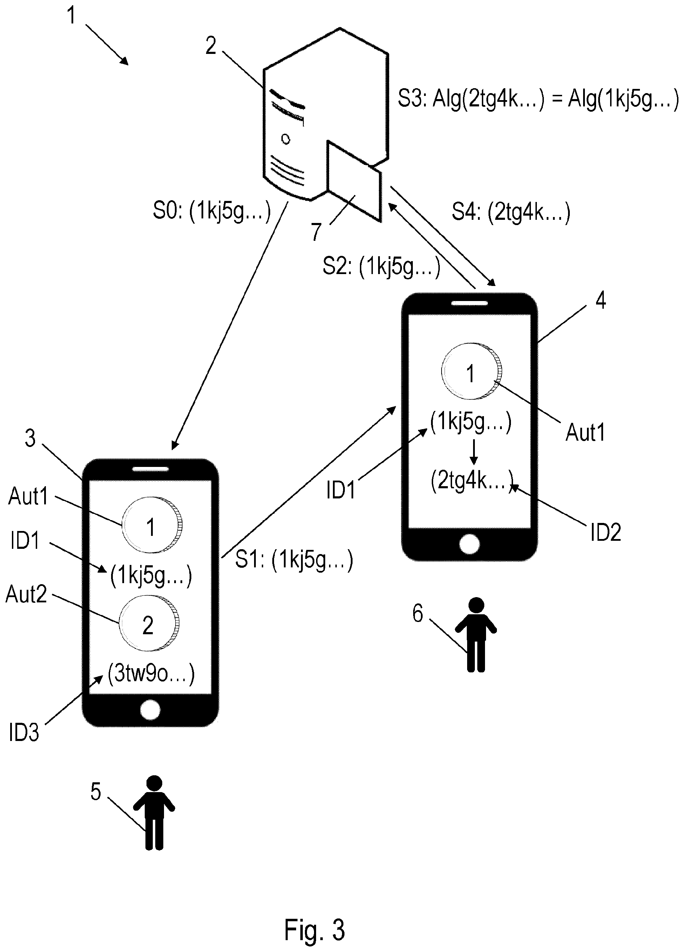

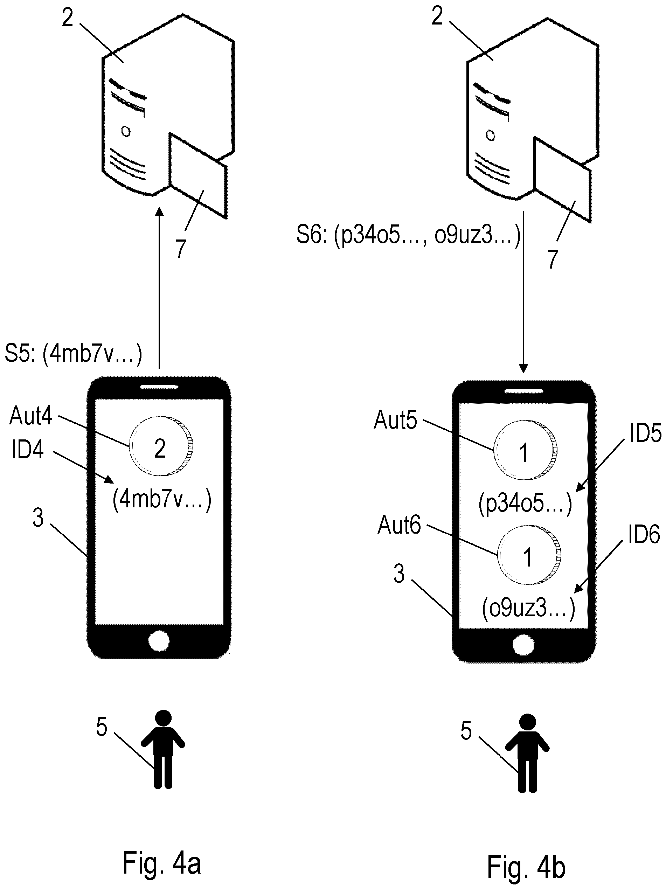

Das Autorisierungsobjekt Aut1, das zwischen den Benutzern 5, 6 übertragen werden soll, ist in der Variante der Figuren 1 und 2 ein Ticket, d.h. ein Nachweis, dass der Benutzer ein physisches Objekt wie einen Getränkeautomaten oder eine Achterbahn benutzen oder eine Örtlichkeit wie ein Theater oder ein Kino betreten darf. Wie später aus den Figuren 3, 4a und 4b ersichtlich ist, könnte das Autorisierungsobjekt jedoch auch etwas anders sein, z.B. eine digitale Münze, die gegen Waren und Dienstleistungen ausgetauscht werden kann.

Das Autorisierungsobjekt Aut1 ist im vorliegenden Fall durch eine eindeutige Kennung ID1 implementiert, d.h. eine Kennung, die einmalig im System 1 ist. Die eindeutige Kennung ID1 kann beispielsweise ein AES-256-Schlüssel, ein AES-128-Schlüssel oder ein anderes digitales Objekt sein, das nur einmal im System 1 vorkommt. Hierin wird definiert, dass ein Benutzer 5, 6 der Besitzer des Autorisierungsobjekts Aut1 ist, wenn er die eindeutige Kennung ID1 dieses Autorisierungsobjekts Aut1 kennt.

Insbesondere kann vorgesehen sein, dass sich mehrere Autorisierungsobjekte Aut1, Aut2, Aut3, Aut4, ..., im Allgemeinen Auti, im System 1 befinden. Beispielsweise kann ein Benutzer 5, 6 mehrere Autorisierungsobjekte Auti besitzen, d.h. der Benutzer 5, 6 kennt mehrere eindeutige Kennungen ID1, ID2, ID3, ID4, ... im Allgemeinen IDj. Alternativ oder zusätzlich können zwei oder mehr Benutzer 5, 6 jeweils zumindest ein Autorisierungsobjekt Autj besitzen, d.h. jeweils zumindest eine eindeutige Kennung IDj kennen.

Um die Autorisierungsobjekte Auti im System 1 zu implementieren, wird im Server 2 eine Liste 7, z.B. eine Datenbanktabelle, geführt. In der Liste 7 befinden sich alle aktuellen eindeutigen Identifikationen IDj der Autorisierungsobjekte Auti, d.h. die Liste 7 hat genauso viele Einträge, wie sich Autorisierungsobjekte Auti im System befinden. Der Inhalt der Einträge der Liste 7 ist die jeweils aktuelle eindeutige Kennung IDj des jeweiligen Autorisierungsobjekts Auti.

Im Folgenden wird das Verfahren betrachtet, um ein erstes Autorisierungsobjekt Aut1 vom ersten Benutzer 5 an den zweiten Benutzer 6 zu übertragen. Hierfür sei eingangs der Ausgangszustand im System 1 erläutert. Im dargestellten Beispiel sind in der Liste 7 zum Zeitpunkt t1 vier eindeutige Kennungen ID1, ID3, ID4, ID5 hinterlegt, d.h. es gibt vier Autorisierungsobjekte Autj im System 1. Zum Anfangszeitpunkt t1 kann das System 1 beispielsweise die vier eindeutigen Kennungen ID1, ID3, ID4, ID5 mittels eines Zufallszahlengenerators erzeugt haben, wobei diese in Figur 1 jeweils durch die ersten fünf Zeichen 1kj5g..., 5tz5u..., 4r46i..., rt55z... eines AES-256-Schlüssels dargestellt sind. Die eindeutigen Kennungen ID1, ID3, ID4, ID5 können beispielsweise durch einen Zufallszahlengenerator erzeugt worden sein.

Weiters ist aus Figur 1 ersichtlich, dass der Benutzer 5 die erste eindeutige Kennungen ID1 kennt, was in Figur 1 durch die ersten fünf Zeichen 1kj5g... dieses AES-256-Schlüssels am ersten Client 3 dargestellt ist. Dies kann beispielsweise dadurch erfolgt sein, dass der Server 2 dem ersten Client 3 in einem Schritt S0 diese erste eindeutige Kennung ID1 geschickt hat. Rein symbolisch ist hierfür auf dem ersten Client 3 des ersten Benutzers 5 ein Ticket dargestellt, das dem Autorisierungsobjekt Aut1 entspricht. Tatsächlich kann im ersten Client 3 jedoch nur die eindeutige Kennungen ID1 vorliegen, ohne dass das Autorisierungsobjekt Aut1 symbolisch dargestellt wird.

Um das Autorisierungsobjekt Aut1 vom ersten Benutzer 5 an den zweiten Benutzer 6 zu übertragen, teilt der erste Benutzer 5 dem zweiten Benutzer 6 in der dargestellten Variante im Schritt S1 die erste eindeutige Kennung ID1 mit, indem die erste eindeutige Kennung ID1 vom ersten Client 3 an den zweiten Client 4 gesandt wird. Zu diesem Zeitpunkt kennen beide Benutzer 5, 6 die erste eindeutige Kennung ID1, sodass sie zu diesem Zeitpunkt theoretisch beide als Besitzer des ersten Autorisierungsobjekts Aut1 angesehen werden. Um diese Situation zu bereinigen, sendet der zweite Benutzer 6, d.h. der zweite Client 4, im Schritt S2 die erste eindeutige Kennung ID1 an den Server 2. Hierfür kann der zweite Client 4 dem Server 2 beispielsweise auch eine Anweisung schicken, dass es sich um eine Transaktion handelt, sodass der Server die im Folgenden beschriebenen Schritte ausführt.

Im Schritt S3 führt der Server 2 Änderungen an der Liste 7 durch, und zwar löscht der Server 2 die erste eindeutige Kennung ID1 aus der Liste 7 heraus, erzeugt eine zweite eindeutige Kennung ID2 (gegebenenfalls wieder über einen Zufallszahlengenerator), und fügt diese zweite eindeutige Kennung ID2 zur Liste hinzu. Es ist ersichtlich, dass die Liste 7 zum Zeitpunkt t2 weiterhin genau vier eindeutige Kennungen ID2, ID3, ID4, ID5 und damit genau vier Autorisierungsobjekte Aut1, Aut2, Aut3, Aut4 umfasst. Es ist hinzuzufügen, dass in der Liste nicht angeführt sein muss, dass es sich bei einer jeweiligen eindeutigen Kennung um ein bestimmtes Autorisierungsobjekt handelt, z.B. eine Angabe ID2 = Aut1, wobei dies jedoch auch vorgesehen sein könnte. Wesentlich ist, dass die reine Anwesenheit einer eindeutigen Kennung ID2, ID3, ID4, ID5 ein Autorisierungsobjekt definiert.

Im Schritt S4 wird die neu erzeugte und nun in der Liste 7 befindliche zweite eindeutige Kennung ID2 an den zweiten Benutzer 6 bzw. an den zweiten Client 4 geschickt. In Figur 1 ist die zweite eindeutige Kennung ID2 beispielhaft durch die ersten fünf Zeichen rt55z... dieses AES-256-Schlüssels dargestellt. Zu diesem Zeitpunkt liegt im zweiten Client 4 die zweite eindeutige Kennung ID2 vor und es ist ersichtlich, dass kein weiterer Client bzw. Benutzer diese die zweite eindeutige Kennung ID2 kennt. Damit ist der zweite Benutzer 6 der neue Besitzer des Autorisierungsobjekts Aut1. Da zudem die erste eindeutige Kennung ID1 aus der Liste 1 gestrichen wurde, kennt der erste Benutzer 5 die eindeutige Kennung dieses Autorisierungsobjekts Aut1 nicht mehr und besitzt dieses damit auch nicht mehr. Es kann somit davon gesprochen werden, dass der zweite Benutzer 6 nun der alleinige Besitzer des ersten Autorisierungsobjekts Aut1 ist. Die Transaktion ist erfolgreich abgeschlossen.

In einem Betrugsfall könnte der erste Benutzer 5 während der Transaktion die erste eindeutige Kennung ID1 an den Server 2 senden, die Streichung dieser ersten eindeutigen Kennung ID1 veranlassen und eine neue zweite eindeutige Kennung ID2 anfordern, bevor dies durch den zweiten Benutzer 6 gemacht wird. In diesem Fall wird der zweite Benutzer jedoch eine Fehlermeldung erhalten, wenn er die erste eindeutige Kennung ID1 an den Server 2 schickt, da sich diese nicht mehr in der Liste 7 befindet. Es ist für den zweiten Benutzer 6 somit unmittelbar ersichtlich, dass die Transaktion nicht durchgeführt werden konnte. Ein Vortäuschen der Transaktion durch den ersten Benutzer 5 ist damit nicht möglich.

Nachdem der zweite Benutzer 5 das Autorisierungsobjekt Aut1 empfangen hat, kann dieser frei darüber verfügen. Beispielsweise kann er es einem dritten Benutzer übertragen, indem er ihm die zweite eindeutige Kennung ID2 senden, woraufhin der dritte Benutzer die zweite eindeutige Kennung ID2 an den Server 2 sendet, der die zweite eindeutige Kennung ID2 aus der Liste 7 löscht, eine x-te eindeutige Kennung erzeugt und diese an den dritten Benutzer retourniert, der damit im Besitz des Autorisierungsobjekts ist.

Der dritte Benutzer könnte beispielsweise ein Client sein, der mit einer mechanischen Schranke verbunden ist. Wenn dieser Client des dritten Benutzers die x-te eindeutige Kennung (oder auch nur eine Bestätigungsnachricht, dass die zweite eindeutige Kennung ID2 in der Liste 7 hinterlegt war) vom Server 2 erhält, kann dieser veranlassen, dass die mechanische Schranke geöffnet wird.

Figur 2 zeigt eine weitere Ausführungsform des Verfahrens zur Übertragung eines Autorisierungsobjekts Aut1 von einem ersten Benutzer 5 an einen zweiten Benutzer 6. Das System 1 von Figur 2 ist strukturell dasselbe wie in Figur 1, sodass im Folgenden lediglich die Unterschiede im Verfahren der Übertragung des Autorisierungsobjekts Aut1 von ersten Benutzer 5 zum zweiten Benutzer 6 gegenüber Figur 1 erläutert werden.

Auch in Figur 2 kennt der erste Benutzer 5 die eindeutige Kennung ID1 und besitzt daher das Autorisierungsobjekt Aut1, beispielsweise da dem Benutzer 5 die eindeutige Kennung ID1 vom Server 2 in einem anfänglichen Schritt S0 übertragen wurde.

In einem optionalen Initialisierungsschritt In1 kann der erste Benutzer 5 beim zweiten Benutzer 6 eine Adresse Ad anfragen, die zur weiteren Übertragung dient. Der zweite Benutzer retourniert die Adresse Ad in einem Schritt In2. In anderen Worten kann der erste Client 3 eine Anfragenachricht an den zweiten Client 4 senden, wonach der zweite Client 4 die die Adresse Ad an den ersten Client 3 sendet.

Es sei jedoch hervorgehoben, dass die Initialisierungsschritte In1, In2 optional sind, z.B. wenn der erste Client 3 die Adresse Ad bereits kennt.

Die Adresse Ad ist beispielsweise eine Telefonadresse zum Senden einer SMS, eine E-Mailadresse, eine IP-Adresse, eine Telefonnummer, eine MAC-Adresse, eine Messenger-ID (z. B. WhatsApp- oder Signal-ID), eine Bluetooth-ID, eine eindeutige Geräte-ID (z. B. UUID) oder eine Wallet-Adresse.

In einem Schritt S5 sendet der erste Benutzer 5 bzw. der erste Client 3 die eindeutige Kennung ID1 des zu übertragenden Initialisierungsobjekts Aut1 zusammen mit der Adresse Ad an den Server 2. Dies veranlasst den Server 2, den Schritt S3 durchzuführen, wie er bezüglich Figur 1 beschrieben wurde, und zwar löscht der Server 2 die erste eindeutige Kennung ID1 aus der Liste 7 heraus, erzeugt eine zweite eindeutige Kennung ID2 (gegebenenfalls wieder über einen Zufallszahlengenerator), und fügt diese zweite eindeutige Kennung ID2 zur Liste hinzu.

In einem Schritt S6 sendet der Server 2 nun die zweite eindeutige Kennung ID2 an die Adresse Ad, die dem zweiten Benutzer 6 bzw. dem zweiten Client 4 zugehörig ist. Zu diesem Zeitpunkt liegt im zweiten Client 4 die zweite eindeutige Kennung ID2 vor und es ist ersichtlich, dass kein weiterer Client bzw. Benutzer diese die zweite eindeutige Kennung ID2 kennt.

Im Vergleich zu Figur 1 ist ersichtlich, dass im Verfahren von Figur 1 zu keinem Zeitpunkt zwei Clients 3, 4 dieselbe eindeutige Identifikation ID1 besitzen.

Die Figuren 3 und 4 zeigen Ausführungsformen, in denen die Autorisierungsobjekte Aut1 digitale Münzen sind. Die Übertagungsverfahren von Autorisierungsobjekten zwischen zwei Benutzern 5, 6 können hier genauso durchgeführt werden, wie dies für die Figuren 1 und 2 beschrieben wurde. Da auch die sonstigen Eigenschaften des Systems 1 gleich sind, werden dieselben Bezugszeichen verwendet.

Wie aus Figur 3 ersichtlich ist, besitzt der erste Benutzer 5 zwei Autorisierungsobjekte Aut1, Aut2, die jeweils einen unterschiedlichen Wert aufweisen. Im dargestellten Beispiel weist das erste Autorisierungsobjekt Aut1 den Wert "1" auf und das zweite Autorisierungsobjekt Aut2 den Wert "2". Um dies technisch umzusetzen, könnte in einer nicht dargestellten Variante in der Liste 7 im Server 2 zu jeder eindeutigen Kennung der Wert hinterlegt sein.

In der Variante von Figur 3 wird jedoch vorgesehen, dass der Wert eines Autorisierungsobjekts Auti unmittelbar aus der eindeutigen Kennung IDj bestimmbar ist. Konkret kann ein Algorithmus Alg bereitgestellt werden, wobei der Algorithmus Alg bei Anwendung auf eine eindeutige Kennung IDj einen Wert ausgibt, welcher als Wert des Autorisierungsobjekts Auti interpretiert werden kann. Damit dies im Kontext des oben beschriebenen Verfahrens funktioniert, muss jedoch zusätzlich vorgesehen werden, dass der Server 2 im Schritt S3 entsprechende Vorkehrungen trifft. Konkret muss der Server 2 die zweite eindeutige Kennung ID2 derart erzeugen oder wählen, dass der Algorithmus Alg denselben Wert ausgibt, wenn er auf die erste eindeutige Kennung ID1 und auf die zweite eindeutige Kennung ID2 angewandt wird. In Figur 3 ist dies durch die Bedingung in Schritt S3 angedeutet, d.h. "S3: Alg(2tg4k...) = Alg(1kj5g...)".

Der genannte Algorithmus kann beispielsweise ein Modulo-Operator, ein Truncation-Algorithmus, eine Faltungsfunktion oder dergleichen sein. Der Algorithmus hat bevorzugt die Eigenschaft, dass es nur eine begrenzte Anzahl an Ergebnissen gibt, z.B. von 2 bis 100 oder von 5 bis 20, sodass es entsprechend viele Werte von Autorisierungsobjekten Auti gibt.

Das Beispiel von Figur 3 wird nun nochmals erläutert. Eingangs besitzt der erste Benutzer 5 das erste Autorisierungsobjekt Aut1 mit der ersten eindeutigen Kennung ID1 = "1kj5g...".

Würde der erste Benutzer 5 den Algorithmus Alg auf die erste eindeutige Kennung ID1 anwenden, so würde man einen Wert erhalten, der dem Wert "1" des Autorisierungsobjekts Aut1 entspricht. Der erste Benutzer 1 sendet nun die erste eindeutige Kennung ID1 im Schritt S1 an den zweiten Benutzer 6, um das erste Autorisierungsobjekt Aut1 an diesen zu übertragen. Der zweite Benutzer 6 sendet im Schritt S2 die erste eindeutige Kennung ID1 an den Server 2, der im Schritt S3 die zweite eindeutige Kennung ID2 erzeugt. Wird der Algorithmus Alg auf die zweite eindeutige Kennung ID2 angewandt, so würde man einen Wert erhalten, der demselben Wert "1" entspricht, der auch nach Anwendung des Algorithmus Alg auf die erste eindeutige Kennung ID1 erhalten wurde. Der Server 2 sendet diese zweite eindeutige Kennung nun im Schritt S4 an den zweiten Benutzer 6, der nun das erste Autorisierungsobjekt Aut1 besitzt. Es ist ersichtlich, dass das erste Autorisierungsobjekt Aut1 im Besitz des zweiten Benutzers 6 denselben Wert aufweist wie zu einem Zeitpunkt, als das erste Autorisierungsobjekt Aut1 noch im Besitz des ersten Benutzers 5 war. Es fand somit eine werterhaltende Übertragung des ersten Autorisierungsobjekts Aut1 statt, die anhand des Algorithmus Alg definiert ist.

In Figur 3 ist weiters dargestellt, dass der erste Benutzer 5 auch ein zweites Autorisierungsobjekt Aut2 mit einem Wert "2" besitzt. Dieses zweite Autorisierungsobjekt Aut2 ist durch die dritte eindeutige Kennung ID3 bestimmt, welche beispielhaft durch die ersten fünf Zeichen "3tw9o..." dargestellt ist. Wenn der Algorithmus Alg auf die dritte eindeutige Kennung ID3 angewandt wird, erhält man einen Wert, der ungleich ist zu jenem, den man bei Anwendung des Algorithmus Alg auf die erste bzw. zweite eindeutige Kennung ID1, ID2 erhält. Dadurch können digitale Münzen mit unterschiedlichem Wert technisch umgesetzt werden.

Es sei festgehalten, dass die Definition eines Wertes der Autorisierungsobjekte Auti nicht nur bei digitalen Münzen sinnvoll ist, sondern auch bei Tickets wie in den Figuren 1 und 2 beschrieben. Wenn die Tickets der Figuren 1 und 2 alle gleichwertig sein sollen, z.B. alle Eintrittskarten für eine Achterbahn sein sollen, ist es nicht notwendig, diesen anhand eines Algorithmus einen Wert zu verleihen. Wenn jedoch unterschiedliche Tickets definiert werden sollen, z.B. sowohl ein Kinoticket als auch ein Theaterticket im System 1 umgesetzt werden sollen, kann der beschriebene Algorithmus eingesetzt werden. Wenn der Algorithmus angewandt auf eine erste eindeutige Kennung ID1 beispielsweise den Wert "0" ausgibt, kann dies als Kinoticket interpretiert werden, und wenn der Algorithmus angewandt auf eine zweite eindeutige Kennung ID2 beispielsweise den Wert "1" ausgibt, kann dies als Theaterticket interpretiert werden.

Im Zusammenhang der digitalen Münzen bietet sich wie in den Figuren 4a und 4b dargestellt zudem an, weitere Funktionen zu implementieren. In Figur 4a besitzt der erste Benutzer 5 ein viertes Autorisierungsobjekt Aut4 mit einer vierten eindeutigen Kennung ID4 ("vierte" bezieht sich hier nicht auf eine Rangfolge, sondern wurde nur zur einfacheren Erläuterung gewählt). Der Algorithmus angewandt auf die vierte eindeutige Kennung ID4 gibt beispielsweise den Wert "2" aus. Der erste Benutzer 5 kann die vierte eindeutige Kennung ID4 nun im Schritt S5 mit der Instruktion an den Server 2 senden, dass das vierte Autorisierungsobjekt Aut4 geteilt werden soll, z.B. in zwei digitale Münzen mit dem Wert "1". Der Server 2 generiert nun eine fünfte eindeutige Kennung ID5 und eine sechste eindeutige Kennung ID6, fügt diese zur Liste 7 hinzu und löscht die siebte eindeutige Kennung ID7 aus der Liste. Die fünfte eindeutige Kennung ID5 und die sechste eindeutige Kennung ID6 haben die Eigenschaft, dass der Algorithmus angewandt auf die vierte eindeutige Kennung ID4 einen anderen Wert liefert als der Algorithmus Alg angewandt auf die fünfte eindeutige Kennung ID5 oder der Algorithmus Alg angewandt auf die sechste eindeutige Kennung ID6. Jedoch soll gelten, dass der Algorithmus Alg angewandt auf die vierte eindeutige Kennung ID4 der "Summe" des Algorithmus Alg angewandt auf die fünfte eindeutige Kennung ID5 und des Algorithmus Alg angewandt auf die sechste eindeutige Kennung ID6 entspricht. Die "Summe" wird hier derart interpretiert, dass die Summen der Werte der fünften und sechsten Autorisierungsobjekte Aut5, Aut6 dem Wert des vierten Autorisierungsobjekts Aut4 entsprechen.

Wie in Figur 4b dargestellt ist, sendet der Server 2 im Schritt S6 die fünfte eindeutige Kennung ID5 und die sechste eindeutige Kennung ID6 zurück an den ersten Benutzer 5, der nun zwei Autorisierungsobjekte Aut5, Aut6 besitzt, die im Wert dem zuvor besessenen Autorisierungsobjekts Aut4 entsprechen.

Nicht dargestellt ist, dass der Server 2 auch eine Funktion des Zusammenfügens von Autorisierungsobjekten Aut5, Aut6 aufweisen kann, um ein einziges höherwertiges Autorisierungsobjekt Aut4 zu erhalten. In diesem Fall startet der Benutzer wie in Figur 4b dargestellt und sendet die zwei den Autorisierungsobjekten Aut5, Aut6 zugehörigen fünften und sechsten eindeutigen Kennungen ID5, ID6 an den Server, der diese aus der Liste 7 löscht, eine vierte eindeutige Kennung ID4 erzeugt, diese in der Liste 7 hinterlegt und an den ersten Benutzer 5 zurücksendet. Der Algorithmus Alg angewandt auf die vierte eindeutige Kennung ID4 liefert einen Wert, welcher der "Summe" des Algorithmus Alg angewandt auf die fünfte eindeutige Kennung ID5 und des Algorithmus Alg angewandt auf die sechste eindeutige Kennung ID6 entspricht.

In allen vorgenannten Ausführungsvarianten können sogenannte Wallets eingesetzt werden, in denen die eindeutigen Kennungen IDj gespeichert werden können und die auch eine grafische Benutzeroberfläche zur Anzeige der Tickets oder digitalen Münzen des Benutzers bieten können. Es sei jedoch darauf hingewiesen, dass diese Wallets nicht der Client 3, 4 selbst sein müssen, sondern die Wallets können eine vom Client 3, 4 gesonderte Applikation sein. Dies ist deshalb bevorzugt, da der Server 2 hierbei in keinem Fall bestimmen kann, wie viele Autorisierungsobjekte sich in einem Wallet befinden. Beispielsweise kann ein Benutzer auch mehrere Clients 3, 4 verwenden, um eine Transaktion über den Server 2 abzuschließen, d.h. eine neue eindeutige Kennung IDj für ein Autorisierungsobjekt Auti vom Server 2 zu erhalten, wonach alle eindeutigen Kennungen IDj der verschiedenen Clients 3, 4 im Wallet gespeichert werden können.

## Patentansprüche

1. Computerimplementiertes Verfahren zur anonymen Übertragung eines digitalen Autorisierungsobjekts (Aut1),
wobei das Verfahren in einem System (1) umfassend einen Server (2), einen ersten Client (3) eines ersten Benutzers (5) und einen zweiten Client (4) eines zweiten Benutzers (6) durchgeführt wird,
wobei der Server (2) eine Liste (7) führt, in welcher eine erste eindeutige Kennung (ID1) für das Autorisierungsobjekt (Aut1) angeführt ist,
wobei nur der erste Client (3) und der Server (2) die erste eindeutige Kennung (ID1) des Autorisierungsobjekts (Aut1) kennen,
wobei das Verfahren zur Übertragung des Autorisierungsobjekts (Aut1) vom ersten Benutzer (5) an den zweiten Benutzer (6) die folgenden Schritte umfasst, die im Server (2) durchgeführt werden:
- Empfangen der ersten eindeutigen Kennung (ID1),
- Erzeugen und Hinzufügen einer zweiten eindeutigen Kennung (ID2) in die Liste (7) und Löschen der ersten eindeutigen Kennung (ID1) aus der Liste (7),
- Senden der zweiten eindeutigen Kennung (ID2) an den zweiten Client (4), wobei nur der zweite Client (4) und der Server (2) die zweite eindeutige Kennung (ID2) kennen.

2. Verfahren nach Anspruch 1, umfassend die Schritte:
- Senden der ersten eindeutigen Kennung (ID1) vom ersten Client (3) an den zweiten Client (4), und
- Senden der ersten eindeutigen Kennung (ID1) vom zweiten Client (4) an den Server (2).

3. Verfahren nach Anspruch 1, umfassend den Schritt:
- Senden der ersten eindeutigen Kennung (ID1) und einer Adresse (Ad) des zweiten Clients (4) vom ersten Client (3) an den Server (2).

4. Verfahren nach einem der vorherstehenden Ansprüche, wobei vor dem Schritt des Sendens der zweiten eindeutigen Kennung (ID2) an den zweiten Client (4) eine Verbindung mit einer eindeutigen Verbindungsidentifikation zwischen dem Server (2) und dem zweiten Client (4) aufgebaut wird, und wobei der Server die zweite Kennung in einen Zwischenstatus setzt, bis der zweite Client (4) den Empfang der zweiten eindeutigen Kennung (ID2) bestätigt, wobei der zweite Client (4) die zweite eindeutige Kennung (ID2) im Falle eines Verbindungsproblems unter Angabe der eindeutigen Verbindungsidentifikation nochmals abrufen kann.

5. Verfahren nach einem der vorstehenden Ansprüche, wobei ein Algorithmus (Alg) bereitgestellt wird, und die erste eindeutige Kennung (ID1) und die zweite eindeutige Kennung (ID2) derart beschaffen sind, dass der Algorithmus (Alg) bei Anwendung auf die erste eindeutige Kennung (ID1) und auf die zweite eindeutige Kennung (ID2) denselben Wert ausgibt, wobei der Algorithmus (Alg) bevorzugt derart beschaffen ist, dass er bei Anwendung auf unterschiedliche eindeutige Kennungen (IDj) zumindest zwei oder zumindest vier und/oder maximal zehn, maximal fünfzig oder maximal hundert verschiedene Werte ausgibt.

6. Verfahren nach Anspruch 5, wobei in der Liste (7) eine dritte eindeutige Kennung (ID3) angeführt ist, wobei der Algorithmus (Alg) bei Anwendung auf die dritte eindeutige Kennung (ID3) einen anderen Wert ausgibt, verglichen zu dem Wert, den der Algorithmus (Alg) bei Anwendung auf die erste oder zweite eindeutige Kennung (ID1, ID2) ausgibt.

7. Verfahren nach Anspruch 5 oder 6, wobei in der Liste eine vierte eindeutige Kennung (ID4) angeführt ist und das Verfahren die folgenden im Server (2) stattfindenden Schritte umfasst:
- Empfangen der vierten eindeutigen Kennung (ID4),
- Erzeugen und Hinzufügen einer fünften eindeutigen Kennung (ID5) und einer sechsten eindeutigen Kennung (ID6) in die Liste (7) und Löschen der vierten eindeutigen Kennung (ID4) aus der Liste (7), wobei der Algorithmus (Alg) bei Anwendung auf die vierte eindeutige Kennung (ID4) einen Wert ausgibt, der gleich groß ist wie die Summe aus Werten, die der Algorithmus (Alg) bei Anwendung auf die fünfte eindeutige Kennung (ID5) und auf die sechste eindeutige Kennung (ID6) ausgibt.

8. Verfahren nach einem der vorstehenden Ansprüche, wobei der zweite Client (4) mit einer mechanischen Schranke verbunden ist und nach Erhalt der zweiten eindeutigen Kennung (ID2) die mechanische Schranke öffnet.

9. Server (2) zur anonymen Übertragung eines digitalen Autorisierungsobjekts (Aut1) von einem ersten Benutzer (3) an einen zweiten Benutzer (4),
wobei der Server (2) zur Kommunikation mit einem ersten Client (5) des ersten Benutzers (3) und zur Kommunikation mit einem zweiten Client (4) des zweiten Benutzers (6) ausgebildet ist,
wobei der Server (2) eine Liste (7) umfasst, in welcher eine erste eindeutige Kennung (ID1) für das Autorisierungsobjekt (Aut1) angeführt ist,
wobei der Server (2) dazu ausgebildet ist, zur Übertragung des Autorisierungsobjekts (Aut1) vom ersten Benutzer (5) an den zweiten Benutzer (6) die folgenden Schritte durchzuführen:
- Empfangen der ersten eindeutigen Kennung (ID1),
- Erzeugen und Hinzufügen einer zweiten eindeutigen Kennung (ID2) in die Liste (7) und Löschen der ersten eindeutigen Kennung (ID1) aus der Liste (7),
- Senden der zweiten eindeutigen Kennung (ID2) an den zweiten Client (4).

10. Server (2) nach Anspruch 9, wobei ein Algorithmus (Alg) bereitgestellt wird, und die erste eindeutige Kennung (ID1) und die zweite eindeutige Kennung (ID2) derart beschaffen sind, dass der Algorithmus (Alg) bei Anwendung auf die erste eindeutige Kennung (ID1) und auf die zweite eindeutige Kennung (ID2) denselben Wert ausgibt, wobei der Algorithmus (Alg) bevorzugt derart beschaffen ist, dass er bei Anwendung auf unterschiedliche eindeutige Kennungen (IDj) zumindest zwei oder zumindest vier und/oder maximal zehn, maximal fünfzig oder maximal hundert verschiedene Werte ausgibt., wobei in der Liste (7) bevorzugt eine dritte eindeutige Kennung (ID3) angeführt ist, wobei die dritte eindeutige Kennung (ID3) derart beschaffen ist, dass der Algorithmus (Alg) bei Anwendung auf die dritte eindeutige Kennung (ID3) einen anderen Wert ausgibt, verglichen zu dem Wert, den der Algorithmus (Alg) bei Anwendung auf die erste oder zweite eindeutige Kennung (ID1, ID2) ausgibt.

11. Server (2) nach Anspruch 9, wobei in der Liste (7) eine vierte eindeutige Kennung (ID4) angeführt ist und der Server (2) dazu ausgebildet ist, die folgenden Schritte durchzuführen:
- Empfangen der vierten eindeutigen Kennung (ID4),
- Erzeugen und Hinzufügen einer fünften eindeutigen Kennung (ID5) und einer sechsten eindeutigen Kennung (ID6) in die Liste (7) und Löschen der vierten eindeutigen Kennung (ID4) aus der Liste (7), wobei der Algorithmus (Alg) bei Anwendung auf die vierte eindeutige Kennung (ID4) einen Wert ausgibt, der gleich groß ist wie die Summe aus Werten, die der Algorithmus (Alg) bei Anwendung auf die fünfte eindeutige Kennung (ID5) und auf die sechste eindeutige Kennung (ID6) ausgibt.

12. System (1) umfassend den Server (2) nach einem der Ansprüche 9 bis 11, den ersten Client (8) und den zweiten Client (9).

13. System nach Anspruch 12, wobei der erste Client (3) dazu ausgebildet ist, die erste eindeutige Kennung (ID1) an den zweiten Client (4) zu senden und wobei der zweite Client (4) dazu ausgebildet ist, die erste eindeutige Kennung (ID1) an den Server (2) zu senden.

14. System nach Anspruch 12, wobei der erste Client (3) dazu ausgebildet ist, die erste eindeutige Kennung (ID1) und eine Adresse (Ad) des zweiten Clients (4) an den Server (2) zu senden.

15. System nach einem der Ansprüche 12 bis 14, ferner umfassend eine mechanische Schranke, wobei der zweite Client (4) mit der mechanischen Schranke verbunden ist und dazu ausgebildet ist, nach Erhalt der zweiten eindeutigen Kennung (ID2) die mechanische Schranke zu öffnen.
